# EUROPÄISCHE PATENTSCHRIFT

(11) **EP 0 403 759 B1**
(45) Veröffentlichungstag und Bekanntmachung des Hinweises auf die Patenterteilung: **05.07.1995**
(21) Anmeldenummer: 90107453.4
(22) Anmeldetag: 19.04.1990
(51) Int. Cl.: H04N 5/265, H04N 5/272, H04N 5/275, H04N 9/74

(54) **Anordnung zur Erzeugung von Bildeffekten in Videogeräten**
Arrangement for obtaining pictoral effects in video apparatus
Dispositif de production d'effets picturaux dans des appareils vidéo

(30) Priorität: 22.06.1989 DE 3920456
(43) Veröffentlichungstag der Anmeldung: 27.12.1990
(73) Patentinhaber: Grundig E.M.V. Elektro-Mechanische Versuchsanstalt Max Grundig GmbH & Co. KG, 90762 Fürth (DE)
(72) Erfinder: Mahmud, Shabaz, Grundig E.M.V., Max Grundig, D-8510 Fürth/Bay (DE)

(56) Entgegenhaltungen:
- EP-A- 0 162 499
- US-A- 4 262 249
- US-A- 4 605 967

## Beschreibung

Die Erfindung betrifft eine Schaltungsanordnung zur Erzeugung von Bildeffekten in Videogeräten mit digitaler Bildsignalverarbeitung.

Bei Aufnahmen mit einer Videokamera oder bei nachträglicher Bearbeitung von Videoaufzeichnungen mit Videorecordern möchte man dem Anwender verschiedene Möglichkeiten zur Manipulation der Bildsignale geben. Bekannte Anwendungsmöglichkeiten sind das Ein- bzw. Ausblenden von Szenen oder das Überblenden von einer Szene auf eine andere. Aus der europäischen Patentanmeldung EP-A-0 162 499 ist eine Anordnung zum Überblenden bekannt. In dieser Anordnung werden die zu verarbeitenden Videosignale jeweils mit einem Wert multipliziert, der dann den Kontrast des Bildes bestimmt. Es wird also ein Bild abgeblendet, während das andere aufgeblendet wird. Die beiden so erzeugten Bilder werden dann zu einem überlagert.

Der Nachteil dieser Anordnung besteht darin, daß bei der Multiplikation eines 8-bit-Videosignals mit einem 8-bit-Signal, welches den Kontrast steuert, das Ausgangssignal eine Länge von 16-bit hat, die - damit der Aufwand der folgenden Schaltung nicht zu groß wird - auf 9-bit reduziert wird, wodurch jedoch Information verloren geht.

Aus der US-A-4 262 249 ist ein Spektrumanalysator bekannt, der eine Einrichtung zur Rauschunterdrückung der auf einer Anzeigeeinheit dargestellten Meßergebnisse enthält. Diese Einrichtung besteht aus einem Komparator, einem Multiplexer, einem Speicher, in dem die darzustellenden Bildpunkte in digitaler Form abgelegt sind, und einem Zähler. Der Speicher und der Zähler sind jeweils mit dem Komparator und dem Multiplexer verbunden. Im Komparator werden die digitalen Bildpunktwerte mit dem Zählwert verglichen und in Abhängigkeit des Vergleichsergebnisses wird der Multiplexer so angesteuert, daß entweder der Bildpunktwert oder der Zählwert weiterverarbeitet wird.
Der Zählwert bildet dabei die Schwelle, bei deren Unterschreiten ein Bildpunktwert als Rauschwert erkannt und nicht weiterverarbeitet wird. Der durch den Zähler vorgegebene Schwellwert kann durch eine Ansteuerschaltung, die die Zählrichtung und Zählgeschwindigkeit angibt, dynamisch angepasst werden.

Aufgabe der Erfindung ist es deshalb eine Anordnung anzugeben, bei der ein einfacher Aufbau gegeben ist ohne auf Genauigkeit bei der Auswertung zu verzichten.

Diese Aufgabe wird erfindungsgemäß dadurch gelöst, daß die Amplitude eines eingehenden digitalen Signals nicht mehr durch eine Multiplikation gewichtet wird, sondern, daß dieses Signal mit einem vorgegebenen Wert verglichen wird, und daß in Abhängigkeit dieses Vergleichsergebnisses eines der beiden Signale durchgesteuert wird.

Als Vergleichssignal wird der Wert eines Zählers benutzt, dessen Wert beim Ein- oder Ausblenden einer Bildfolge sich erhöht bzw. erniedrigt. Im vorliegenden Fall wird jeweils der niedrigere Wert an den Ausgang der Schaltung gelegt. Die Geschwindigkeit, mit der der Zähler zählt, kann dabei vorgegeben werden. So kann sich der Zählerstand, z.B. nach jeder Zeile oder jedem Bild, erhöhen oder erniedrigen.

Weiterhin können die Grenzwerte, zwischen denen der Zähler auf und ab zählt, an die Amplituden des eingehenden Signals leicht angepaßt, d.h. in gleicher Weise digital codiert werden, so daß z.B. beim Ein-, Aus- oder Überblenden der digitale Signaleingang dem Grauwert eines Bildsignals entspricht, während zur Erzielung von Farbeffekten der digitale Signaleingang einem Farbsättigungswert einer der drei Grundfarben entspricht.

Bei allen Bildeffekten, d.h. Ein-, Aus-, Überblenden oder Farbveränderungen, wird ein weicher Übergang geschaffen, da nicht alle Amplitudenwerte verändert werden, sondern jeweils nur Bereiche abgetrennt werden, die eine bestimmte Grenze überschreiten oder unterschreiten.

Im folgenden wird die Erfindung anhand von Ausführungsbeispielen noch näher erläutert.

Es zeigen
- Fig. 1: Anordnung zum Ein- oder Ausblenden von Szenen,
- Fig. 2: Diagramm einer Zeile mit Bildsignal, Zählerwert und Komparatorausgang,
- Fig. 3: erweiterte Anordnung nach Fig. 1,
- Fig. 4: erweiterte Anordnung nach Fig. 1

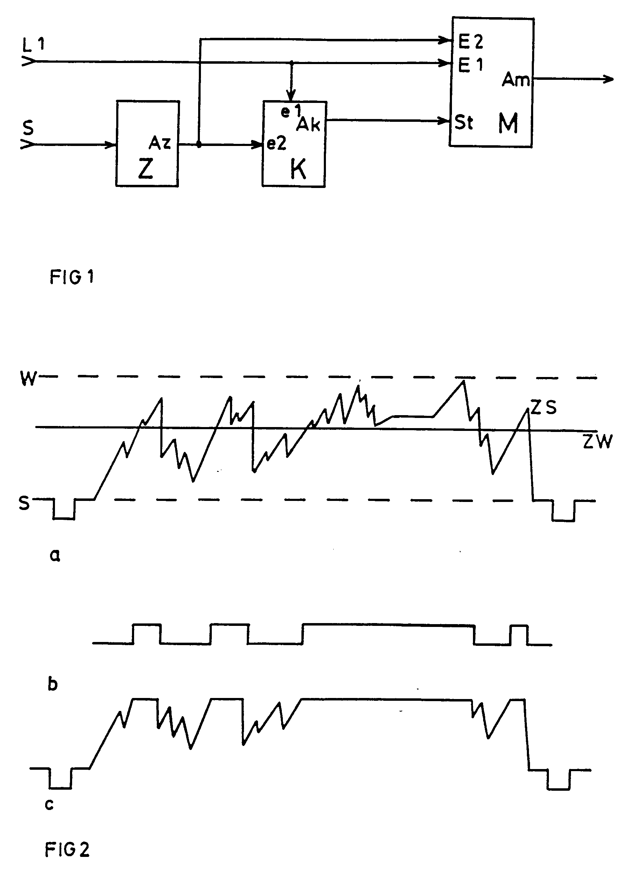

In Fig. 1 wird eine Ausführung gemäß der Erfindung dargestellt. Das Leuchtdichtesignal L1 eines zu verarbeitenden Videosignals wird an den Eingang E1 eines Multiplexers M und an den Eingang e1 eines Komparators K geführt. Der zweite Eingang e2 des Komparators wird mit dem Ausgang Az des Zählers Z verbunden. Dieser Zählerausgang ist weiterhin mit dem Eingang E2 des Multiplexers M verbunden. An den Steuereingang St des Multiplexers M führt eine Verbindung mit dem Ausgang Ak des Komparators K. Dem Zähler Z wird ein Ansteuersignal S zugeführt.

Das Ansteuersignal S beinhaltet alle Signale, die zum Ansteuern des Zählers notwendig sind, d.h. Taktsignal, Reset-Signal und die Ansteuersignale, welche die Zählrichtung und die Zählgeschwindigkeit bestimmen. Die Ansteuersignale S können je nach Anwendung in einer Logikschaltung oder bevorzugt in einem Mikroprozessor erzeugt werden. Der Zählerstand entspricht im Hinblick auf die Codierung eines Ausgangssignals jeweils einem Graupegel des Leuchtdichtesignals, der in vorgegebener Richtung und Geschwindigkeit verändert und dem Komparator zugeführt wird. In diesem Komparator wird der Zählerstand, d.h. ein vorgegebener Grauwert, mit der Amplitude des Leuchtdichtesignals L1, welches in digitaler Form vorliegt, verglichen und ein Ausgangssignal Ak erzeugt, das den Multiplexer M ansteuert. Die Ansteuerung erfolgt so, daß immer eines der beiden Signale durchgesteuert wird. Beim Einblenden wird der Zählerstand erhöht, wobei der Zeitpunkt, an dem jeweils weitergezählt wird, vorgegeben wird. Es kann z.B. nach jeder Zeile oder nach jedem Bild oder Halbbild der Zähler erhöht werden. Beim Ausblenden wird ebenfalls der kleinere der beiden Werte an den Eingängen E1 und E2 zum Ausgang Am durchgeschaltet, die Zählrichtung ist jedoch entgegengesetzt zur Zählrichtung beim Einblenden.

In Fig. 2 ist die Wirkung der Anordnung anhand des Signalverlaufs einer Zeile dargestellt. Dazu ist in Fig. 2a der Verlauf einer Zeile gezeigt, in der die Linie ZW die Amplitude des durch den Zähler vorgegebenen Grauwertes darstellt. Die obere Grenze des Zeilensignals ist der Weißpegel W, die untere der Schwarzpegel S. In diesen Grenzen kann sich auch der Zählwert ZW des Zählers bewegen.

Fig. 2b zeigt das Signal am Ausgang Ak des Komparators. Wenn das Signal ZS größer ist als der Zählwert ZW liegt am Komparatorausgang eine logische Eins an, wenn der Zählwert ZW größer ist als das Signal ZS, so liegt am Ausgang Ak eine logische Null an.

Der Komparatorausgang steuert nun den Multiplexer M so an, daß jeweils das Signal mit dem niedrigeren Pegel an den Ausgang Am des Multiplexers M durchgeschaltet wird. Das Ausgangssignal Am ist in Fig. 2c dargestellt.

Die Diagramme 2b und 2c beziehen sich auf eine Anordnung gemäß Fig. 1, wobei vorausgesetzt ist, daß der Multiplexer M bei dem logischen Pegel Null am Steuereingang St das Signal am Eingang E1 und bei logischem Pegel Eins das Signal am Eingang E2 durchschaltet.

Aus Fig. 2 ist es ersichtlich, daß beim Ausblenden, d.h. wenn der Zählwert ZW verringert wird, die hellsten Bildstellen über der Linie ZW unterdrückt, d.h. verdunkelt werden, während die übrigen, d.h. die unter der Linie ZW, unverändert übertragen werden. Erreicht der Zählwert den Schwarzpegel S, dann wird kein Bildsignal, d.h. eine schwarze Zeile übertragen. Wenn der Zählwert ZW den Weißpegel erreicht wird die Zeile unverändert übertragen.

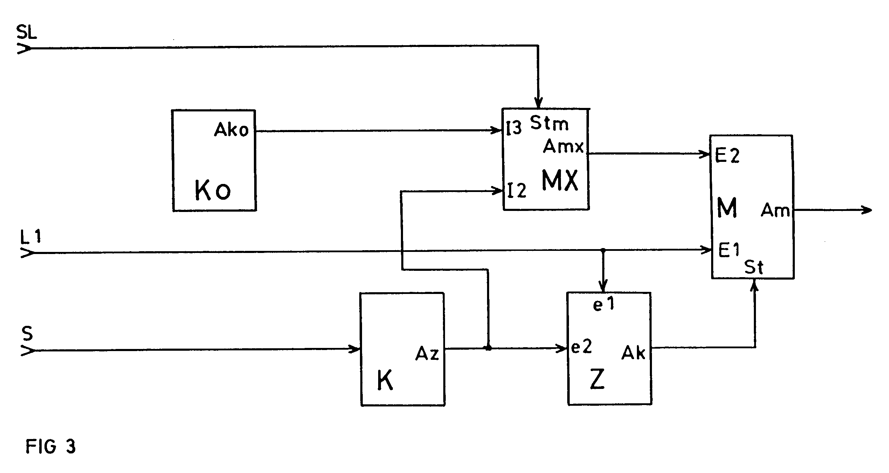

Fig. 3 zeigt eine erweiterte Anordnung nach Fig. 1. Bei dieser Anordnung wird wieder das Leuchtdichtesignal L1 an die Eingänge E1 des Multiplexers M und e1 des Komparators K geführt. Ebenso ist der Ausgang Ak des Komparators K wieder mit dem Ansteuereingang St des Multiplexers M verbunden und der Steuereingang S der Schaltung mit dem Zähler Z. Der Ausgang Az des Zählers Z ist wie in Fig. 1 mit dem Eingang e2 des Komparators K verbunden. Im Unterschied zu Fig. 1 ist der Ausgang Az des Zählers Z mit dem Eingang I2, eines zweiten Multiplexers MX verbunden, an dessen zweitem Eingang I3 der Ausgang Ako des Bausteins KO angeschlossen ist. An den Steuereingang Stm des Multiplexers MX führt noch das Signal SL.

Der Unterschied in der Wirkungsweise von Fig. 3 zu Fig. 1 besteht darin, daß der Zählerausgang Az nicht direkt mit dem Multiplexer M verbunden ist, sondern mit einem zweiten Multiplexer MX. An diesem Multiplexer MX liegen ein dynamischer Grauwert am Eingang I2, der dem Zählerstand von Z entspricht, und ein konstanter Grauwert am Eingang I3, der durch den Baustein KO vorgegeben wird. Mit einem Schaltsignal SL kann vorgegeben werden, welcher der beiden Eingänge an den Ausgang Amx durchgeschaltet wird, d.h. welches Signal an den Eingang E2 des Multiplexers M geführt wird. Wenn also der Zählwert Az kleiner ist als der Wert des Leuchtdichtesignals L1, wird nicht mehr unbedingt der Zählwert Az an dem Ausgang Am des Multiplexers M ausgegeben, sondern wahlweise auch ein konstanter Grauwert. Diese Anordnung hat den Vorteil, daß man jetzt einen unabhängigen Grauwert vorgeben kann, den das Bildsignal beim Ausblenden immer dann hat, wenn der Zählerstand an Az niedriger ist als der Wert des Leuchtdichtesignals bzw. man kann einen konstanten Anfangswert beim Einblenden vorgeben.

Durch ein geeignetes Steuersignal kann man die Anordnung auch so ansteuern, daß dann, wenn der Zählerwert an Az einen bestimmten Schwellenwert überschreitet, der Zählwert durchgesteuert wird, und ansonsten der konstante Grauwert. Bis zu einem bestimmten Grauwert wird ein Graupegel entsprechend dem Zählerstand ausgegeben und darunter ein vorgegebener Grauwert.

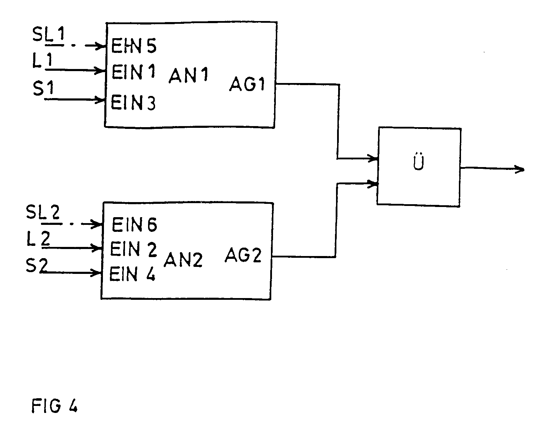

Fig. 4 zeigt eine Anordnung zum Überblenden von einem Bild oder einer Szene auf ein anderes Bild oder eine andere Szene. Die Anordnung besteht aus zwei Anordnungen AN1, AN2 nach Fig. 1 oder Fig. 3. Sie verfügt über Eingänge EIN1 und EIN2 mit den Eingangssignalen L1 und L2, d.h. mit zwei Leuchtdichtesignalen von zwei Videoquellen. An zwei weitere Eingänge EIN3 und EIN4 führen die Steuerleitungen S1 und S2, welche die zu Fig. 1 bzw. Fig. 3 beschriebenen Steuersignale beinhalten. Die Eingänge EIN5 und EIN6, die in Fig. 4 gestrichelt gezeichnet sind, sind notwendig, wenn die Anordnungen AN1 und AN2 nach Fig. 3 aufgebaut sind. Sie führen die Steuersignale SL1 und SL2, deren Funktion bei der Beschreibung von Fig. 3 (dort ist das Steuersignal mit SL bezeichnet) erklärt ist.

Die Zähler der Blöcke AN1 und AN2 werden so gesteuert, daß sie entgegengesetzte Zählrichtungen haben, d.h. während ein Bild eingeblendet wird, wird das andere ausgeblendet.

Die Ausgangssignale AG1 und AG2 der Blöcke AN1 und AN2 werden zu einem Überlagerungssnetzwerk Ü geführt, in dem beide Bilder, also das Bild, das eingeblendet wird und das Bild, das ausgeblendet wird, zu einem überlagert werden, so daß der Überblendeffekt entsteht.

Eine weitere Anwendung der Anordnung nach Fig. 1 oder Fig. 3 besteht darin, mit diesen Anordnungen Farbeffekte zu erzielen. Dazu liegt als Eingangssignal L1 nicht ein Leuchtdichtesignal an, sondern ein Farbsignal. Dieses Farbsignal kann in der oben beschriebenen Weise wie das Leuchtdichtesignal verändert werden. Bei der Anwendung der erfindungsgemäßen Anordnung auf alle drei Grundfarben können so die Farbtöne verändert werden.

## Patentansprüche

1. Anordnung zur Erzeugung von Bildeffekten in Videogeräten mit digitaler Verarbeitung der Bildsignale,
**dadurch gekennzeichnet**, daß
- die Anordnung einen Zähler (Z) enthält, welcher seinen Zählerstand in vorgebbarer Geschwindigkeit und Richtung sowie zwischen vorgebbaren Randwerten ändert,
- das Ausgangssignal des Zählers (Z) ständig in einem Komparator (K) mit dem digitalen Amplitudenwert eines Videosignals verglichen wird,
- der Komparatorausgang (AK) mit dem Steuereingang (St) eines Multiplexers (M) mit zwei Eingängen (E1, E2) verbunden ist,
- einem ersten Dateneingang (E1) des Multiplexers der digitalisierte Amplitudenwert des Videosignals und einem zweiten Dateneingang (E2) das Ausgangssignal des Zählers zugeführt wird, und
- der Komparator (K) den Multiplexer (M) so ansteuert, daß je nach Vorgabe der größere oder der kleinere der den beiden Dateneingängen zugeführten Werte durchgeschaltet wird.

2. Anordnung nach Anspruch 1, **dadurch gekennzeichnet**, daß am zweiten Dateneingang (E2) des Multiplexers (M) das Ausgangssignal eines weiteren Multiplexers (MX) mit zwei Eingängen (I2, I3) anliegt, wobei am ersten Eingang (I2) des weiteren Multiplexers (MX) der Zählwert anliegt und am zweiten Eingang (I3) ein konstanter Wert, von denen jeweils einer durch geeignete Ansteuerung des teuereinganges (Stm) des weiteren Multiplexers ausgewählt wird.

3. Anordnung nach Anspruch 1 oder 2, **dadurch gekennzeichnet**, daß zum Ein- oder Ausblenden eines Bildes als digitaler Amplitudenwert der Grauwert eines Videosignals anliegt, und die Grenzen des Zählers so festgelegt sind, daß sie im digitaliserten Amplitudenbereich von Grauwerten eines Videosignals liegen.

4. Anordnung nach Anspruch 1 oder 2, **dadurch gekennzeichnet**, daß zum Überblenden von einem Bild auf ein anderes der Ausgang der Anordnung einem ersten Eingang einer Addierschaltung (Ü) zugeführt wird, deren anderer Eingang mit dem Ausgang einer zweiten Anordnung nach Anspruch 1 oder 2 verbunden ist, wobei die Zähler der beiden Anordnungen in entgegengesetzter Richtung zählen.

5. Anordnung nach Anspruch 1 oder 2, **dadurch gekennzeichnet**, daß zur Erzielung von Farbeffekten der digitale Amplitudenwert des Videosignals der Wert der Farbsättigung einer der drei Grundfarben ist und die Grenzen des Zählers so festgelegt sind, daß sie im digitalisierten Amplitudenbereich der Farbsättigung des jeweiligen Farbsignals liegen.

## Claims

1. Arrangement for generating picture effects in video apparatuses having digital processing of the picture signals, characterized in that
- the arrangement contains a counter (Z) which changes its counter reading at a set rate and in a set direction and between set boundary values,
- the output signal of the counter (Z) constantly is compared with the digital amplitude value of a video signal in a comparator (K),
- the comparator output (AK) is connected to the control input (St) of a multiplexer (M) having two inputs (E1, E2),
- the digitized amplitude value of the video signal is fed to a first data input (E1) of the multiplexer and the output signal of the counter is fed to a second data input (E2), and
- the comparator (K) triggers the multiplexer (M) in such a way that, depending on setting, the greater or the smaller of the two values fed to the data inputs is gated through.

2. Arrangement according to Claim 1, characterized in that the output signal of a further multiplexer (MX) having two inputs (I2, I3) is applied to the second data input (E2) of the multiplexer (M), the count value being applied to the first input (I2) of the further multiplexer MX and a constant value is applied to the second input (I3), and of these one is selected in each case by a suitable triggering of the control input (Stm) of the further multiplexer.

3. Arrangement according to Claim 1 or 2, characterized in that the tonal value of a video signal is applied as digital amplitude value for the purpose of fading a picture in or out, and the limits of the counter are fixed so that they are situated in the digitized amplitude range of tonal values of a video signal.

4. Arrangement according to Claim 1 or 2, characterized in that, for the purpose of fading a picture over onto another, the output of the arrangement is fed to a first input of an adding circuit (Ü), whose other input is connected to the output of a second arrangement according to Claim 1 or 2, the counters of the two arrangements counting in opposite direction.

5. Arrangement according to Claim 1 or 2, characterized in that, for the purpose of achieving colour effects, the digital amplitude value of the video signal is the value of the colour saturation of one of the three primary colours and the limits of the counter are fixed so that they are situated in the digitized amplitude range of the colour saturation of the respective colour signal.

## Revendications

1. Dispositif pour produire des effets d'image dans un appareil vidéo à traitement numérique des signaux d'image, caractérisé en ce que
- le dispositif contient un compteur (Z), dont l'état de comptage varie à une vitesse et dans un sens pouvant être prédéterminés, ainsi qu'entre des valeurs marginales pouvant être prédéterminées,
- le signal de sortie du compteur (Z) est comparé en permanence, dans un comparateur (K), à la valeur d'amplitude numérique d'un signal vidéo,
- la sortie (AK) du comparateur est reliée à l'entrée de commande (St) d'un multiplexeur (M) comportant deux entrées (E1,E2),
- la valeur d'amplitude numérisée du signal vidéo est envoyée à une première entrée de données (E1) du multiplexeur et le signal de sortie du compteur est envoyé à une seconde entrée de données (E2), et
- le comparateur (K) commande le multiplexeur (M) de telle sorte qu'en fonction de la prédétermination, la plus grande ou la plus petite des deux valeurs envoyées aux entrées de données, est transmise.

2. Dispositif selon la revendication 1, caractérisé en ce que le signal de sortie d'un autre multiplexeur (MX) comportant deux entrées (I2, I3) est appliqué à la seconde entrée de données (E2) du multiplexeur (M), la valeur de comptage étant appliquée à la première entrée (I2) de l'autre multiplexeur (MX) et une valeur constante étant appliquée à la seconde entrée (I3), respectivement l'une de ces valeurs étant sélectionnées pour les moyens de commande appropriés de l'entrée de commande (Stm) de l'autre multiplexeur.

3. Dispositif selon la revendication 1 ou 2, caractérisé en ce que pour l'introduction et la suppression d'une image, la valeur de gris d'un signal vidéo est présente en tant que valeur d'amplitude numérique, et que les limites du compteur sont fixées de telle sorte qu'elles sont situées dans la gamme numérisée d'amplitudes de valeurs de gris d'un signal vidéo.

4. Dispositif selon la revendication 1 ou 2, caractérisé en ce que, pour l'application en superposition d'une image sur une autre, la sortie du dispositif est raccordée à une première entrée d'un circuit additionneur (Ü), dont l'autre entrée est reliée à la sortie d'un second dispositif selon la revendication 1 ou 2, les compteurs desdits dispositifs effectuant des comptages en des sens opposés.

5. Dispositif selon la revendication 1 ou 2, caractérisé en ce que pour l'obtention d'effets de couleurs, la valeur d'amplitude numérique du signal vidéo est la valeur de la saturation de l'une des trois couleurs fondamentales, et les limites du compteur sont fixées de telle sorte qu'elles sont situées dans la gamme d'amplitudes numérisées de la saturation du signal de couleur respectif.
